(19) Europäisches Patentamt
European Patent Office
Office européen des brevets

(11) **EP 4 245 667 A1**

(12) **EUROPEAN PATENT APPLICATION**

(43) Date of publication:
**20.09.2023 Bulletin 2023/38**

(21) Application number: **22382252.9**

(22) Date of filing: **16.03.2022**

(51) International Patent Classification (IPC):
**B64F 5/60** $^{(2017.01)}$ **G01M 1/12** $^{(2006.01)}$

(52) Cooperative Patent Classification (CPC):
**B64F 5/60; G01M 1/125**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundación Tekniker**
**20600 Eibar (Guipuzkoa) (ES)**

(72) Inventors:
• **GONZALO DE FRANCISCO, Oscar**
**Eibar (ES)**
• **SEARA EIZAGUIRRE, Jose María**
**Eibar (ES)**
• **CHEKH OUMAR, Brahim Ahmed**
**Eibar (ES)**

(74) Representative: **Balder IP Law, S.L.**
**Paseo de la Castellana 93**
**5ª planta**
**28046 Madrid (ES)**

(54) **METHOD, SYSTEM AND COMPUTER PROGRAM PRODUCT FOR OBTAINING THE POSITION OF THE CENTRE OF GRAVITY OF AN AIRCRAFT**

(57) A computer-implemented method for obtaining the 3D position of the Centre of Gravity (CoG) of an aircraft (1) having at least three support points (11-13) and measurement platforms (21-23) having load cells, disposed under each support point (11-13) is disclosed. The method comprises: performing the following actions with the aircraft (1) disposed in two different positions: obtaining the position of ground target points (41) and establishing a ground reference system ($RS_{GROUND}$) therewith; obtaining the position of aircraft target points (43), establishing an aircraft reference system ($RS_{AIRCRAFT}$) and locating the aircraft (1) in the ground reference system ($RS_{GROUND}$); obtaining the position of platforms target points, establishing platform reference systems ($RS_{PLATFORM-A}$, $RS_{PLATFORM-B}$, $RS_{PLATFORM-C}$) and locating the measurement platforms (21-23) in the ground reference system ($RS_{GROUND}$); at each measuring platform (21-23), measuring an applied force to the load cells; calculating a position of the load application point in each measurement platform (21-23); and locating the load application point in the ground reference system ($RS_{GROUND}$); obtaining the position of the CoG of the aircraft (1) in the ground reference system ($RS_{GROUND}$); calculating a 3D line containing the position of the CoG of the aircraft (1) and the gravity axis; and transforming this 3D line to the aircraft reference system ($RS_{AIRCRAFT}$). From the two 3D lines, obtaining the 3D coordinates of the CoG of the aircraft (1).

**FIG. 1**

**Description**

**TECHNICAL FIELD**

The present invention relates to the field of aircrafts. In particular, it relates to methods and systems for improving weight distribution and balance of aircrafts. This may be done by calculating the position of the centre of gravity of an aircraft.

**STATE OF THE ART**

The weight distribution of an aircraft, which relates to the weight supported by each landing gear, and the balance of an aircraft, are important factors in the stability of the aircraft during its operation, affecting the consumption and the environmental impact of the operation. A suitable free load distribution and balancing reduces the moment produced by the thrust force and leads to a more efficient operation of the engines, finally impacting the fuel consumption. Free load is usually understood as an additional contribution to the total weight of the aircraft, usually in the form of luggage, people, etc. Balancing is even more important in the case of helicopters, because in helicopters balancing affects the manoeuvrability.

Some modern aircrafts are equipped with a large set of sensors aimed at securely facilitating operation of the aircraft. Thus, a great deal of parameters associated to safe and efficient operation is monitored in real time. For example, US8060296B2 discloses an aircraft weight and balance system that determines center of gravity for an aircraft based on load measurement sensors disposed on the nose landing gear or on the main landing gear. Another example is given in CA2665963A1, which discloses a system for determining weight and balance of an aircraft, which uses a plurality of pressure sensors disposed on the shock struts of the landing gears, and a plurality of load sensors disposed on the landing gears. However, the use of integrated sensors may involve a redesign of the aircraft, for example of the landing gear components, which is time consuming and usually not feasible in terms of security regarding the critical safety thresholds imposed in the aerospace field.

Currently, the weight and balance of an aircraft is usually carried out in 2D (that is to say, in a plane), obtaining the centre of gravity (CoG) of the aircraft in the ground plane after performing a manual balancing operation of the aircraft (obtaining of neutral pitch and roll angles) in the jacking points of the aircraft. For example, one practical way of determining the weight and balance of an aircraft is to measure respective vertical loads imposed on the ground by the landing gear of an aircraft and its attitude relative to the horizontal, if any, and then, calculate the weight and center of gravity location. The best way to determine the landing gear ground loads is to measure them directly, i.e., with a calibrated scale placed under each landing gear. However, this only allows the obtaining of the center of gravity in 2D, i.e. in the ground plane. For example, CN108106780A discloses a device for measuring the center of gravity in 2D of an aircraft having three landing gears. It uses three hydraulically actuated scales for balancing the aircraft.

A drawback derived from obtaining the centre of gravity (CoG) of the aircraft in the ground plane (2D) is that the position of the third coordinate could vary the behavior of the aircraft, reducing the efficiency and stability in some maneuvers. This becomes more significant with helicopters and tiltrotors, as rotations of the aircraft are produced around the 3D center of gravity.

In order to overcome these problems, certain proposals have been made. For example, KR100937888B1 discloses a method and system for measuring weight and center of gravity of an aircraft. It requires installing three hydraulic cylinder jacks at respective three lower points of the aircraft for lifting the aircraft from the ground. Load cells capable of measuring the weights of the corresponding points are installed on the upper portions of the three hydraulic cylinder jacks. However, this configuration causes measurement errors due to small misalignments of the jacks compared to the gravity axis that must be corrected manually. Besides, it requires balancing the aircraft, that is to say, positioning the aircraft at specific pitch and roll angles prior to measuring the centre of gravity, which is highly time consuming as it is a trial an error process. What is more, this method implies an associated risk for the human operators manipulating the jacks for alignment and lifting processes. Similarly, KR20030034668A discloses a method for determining the center of gravity on the vertical axis of an aircraft, which involves lifting the front part of the aircraft. This approach also requires jacks, which need be accurately aligned with the gravity direction in order to prevent measurement errors.

JPH04328438A discloses an apparatus for measuring weight and center of gravity of an aircraft in 3D which involves lifting the front landing gear of the aircraft. However, the computation is simplified, for example by not measuring the inclination angle, or by not considering changes in the load application points when the front landing gear of the aircraft is elevated, leading to inaccurate results of the position of the center of gravity.

Similarly, US2002/0099497A1 discloses a method and apparatus for determining the centre of gravity of an aircraft having a plurality of wheels. It includes determining the load on one of the landing gears and the inclination angle produced by an elevation in that landing gear, and relating the landing gear load to the aircraft centre of gravity based on the aircraft inclination. However, it neglects the variations of the load application points in the different landing gears or scales because it considers a horizontal rotation axis in the main landing gear, which is not the case when a roll angle exists. Besides, it assumes only a pitch angle variation for the calculation, but a roll angle variation can also occur, thus producing not only longitudinal CoG variation but also lateral variation.

Therefore, there is a need to develop a method and system for obtaining the centre of gravity of an aircraft in 3D which tries to overcome the limitations of conventional methods and systems therefor.

## DESCRIPTION OF THE INVENTION

The present invention provides a method and system for calculating the position (x, y, z) of the centre of gravity of an aircraft, which intend to solve the shortcomings of prior-art methods and systems therefor.

The aircraft whose centre of gravity is being obtained has a plurality of support points, in particular, at least three support points. A measurement platform comprising a plurality of load cells is disposed under each support point. The support point may be, for example, a landing gear. In aircrafts not having landing gears (such as in helicopters, which typically have two support bars), at least three support points are also required. For example, in the case of aircrafts having two support bars, two support points can be defined in one of the support bars, while the third support point corresponds to (or is defined in) the second support bar. In this case, a measurement platform (scale) is for example disposed under each end of one support bar, and a third measurement platform (scale) is disposed under the second support bar.

The method is carried out in at least two different poses of the aircraft, wherein given a certain position in height of at least one support point in the first pose, in the second pose the position in height of said at least one support point is modified with respect to its position in the first pose. For example, in a first pose, the aircraft has all the support points (such as landing gears) resting on the measurement platforms at floor or ground level; and in a second pose, the aircraft has at least one support point in an elevated position. Additional measurements may be done in different positions. The method is based on measuring/obtaining force information and position information (load application points and reference points) in the at least two positions of the aircraft. The system combines the information of the reaction force in the support points and the position of several target points, using sensorized platforms (i.e. scales) and an external position measurement system (i.e., photogrammetry, laser tracker).

A ground reference system and an aircraft reference system are obtained using target points disposed in well-known positions of the ground and/or aircraft. Reference systems for each measuring platform are also obtained using platform target points.

In embodiments of the invention, in the first pose, force information, load application points and aircraft position are obtained. From this information, the position of the CoG in 2D is obtained. When the first pose is a pose in which the aircraft has all support points at ground level, in fact, what is obtained is a position of the CoG in the floor plane (XY), and it is known that the Z coordinate is in a line perpendicular to the floor plane (XY). Therefore, a line perpendicular to the floor plane (XY) containing the CoG in the floor plane is obtained (from now on, first line). The line perpendicular to the floor plane (XY) containing the position of the CoG in the floor plane (XY) is expressed or transformed to the reference system of the aircraft.

The second pose can be a pose in which one of the platforms and corresponding aircraft's support point are elevated. In this case, preferably, the front support point is elevated, while the other support points (for example two rear landing gears in the event of an aircraft having three landing gears) remain on the platforms at ground level. The elevated support point (such as the front landing gear) is elevated by means of elevating means disposed under the corresponding platform. So, the aircraft is inclined with respect to the floor (XY plane). In the second pose, force information, load application points and aircraft position are obtained. From this information, the position of the CoG in 2D in the second position is obtained, and a line perpendicular to the floor plane (XY) containing the CoG in the floor plane is obtained (from now on, second line). A reference system of the aircraft in this new position must be obtained using target points. The second line is expressed or transformed to the reference system of the aircraft, that is the same one as measured in the first pose but in a different position.

So, the centre of gravity (CoG) is calculated from the measurements of weight performed at each support point (that is to say, at each platform) and from the pose (also referred to as attitude) of target elements (aircraft and platforms). Weight measurements and pose of target elements are obtained in two different positions of the aircraft. The position of the CoG is obtained in a reference system of the aircraft.

The CoG of the aircraft in 3D is calculated by computing the intersection of the first line and the second line in the reference system of the aircraft. The intersection represents the position of the CoG of the aircraft in the reference system of the aircraft. Unlike prior art methods, because this calculation is performed in the reference system of the aircraft, it is not necessary to dispose the aircraft in a balance position in order to perform the measurements. It has been assumed that the aircraft behaves as a rigid body. Therefore, the position of the CoG of the aircraft in 3D will be fixed as long as the configuration or free load of the aircraft does not change.

The measuring system is composed of several elements. It comprises a plurality of platforms (also referred to as scales), each of which is equipped with a plurality of load cells (also referred to as force sensors) configured to obtain the weight or force applied to the platform and the load application point in the platform (scales). There are as many platforms as support points (such as landing gears). Thus, in a particular case, in which the aircraft has three support points (for example a front landing gear and two rear landing gears), the measuring system has three platforms. Each platform is disposed under each corresponding support point. In embodiments of the invention, each platform has four load cells, but it may have a different number of load cells. The load cells are used for measuring the weight at the support point disposed on the corresponding platform. The total weight of the aircraft is distributed on the different platforms. A platform or scale records the weight it supports as the sum of the weights captured by each load cell. Each platform also permits to identify the point of the platform on which the weight is applied (load application point) by evaluating the signals captured by the different load cells. This is done using forces and moments computations from the measurements provided by the load cells. It is assumed that the surface of the platform is rigid enough not to be significantly deformed, and that the load application point is within an area defined by the position of the load cells in the platform plane.

The measuring system also comprises elevating means disposed under one of the platforms. In an aircraft in which the support points are landing gears (typically three landing gears), the elevating means under the platform is preferably located under the front landing gear. The elevating means is used for lifting the front landing gear when required. This enables performing measurements with different aircraft inclination.

The measuring system also comprises a plurality of target points or target elements disposed at specific locations at the aircraft and its surroundings. In embodiments of the invention, the target elements are disposed at specific points on the floor in the vicinity of the aircraft (ground target points), in different points of the aircraft, such as in some or all of the jacking points (aircraft target points) and on the platforms (scales) (platform target points). A previous characterization of the target elements is also required, meaning that accurate positions of the target elements on the floor, relative positions of aircraft target points and relative positions of platform target points, are required. This previous characterization can be done by applying any conventional characterization method and is out of the scope of the invention. The position of the target points of the aircraft, target points in the platforms and ground references are assumed to be well-known in the corresponding reference system, so that all can be located in a global reference system (such as a ground reference system) when measured. Ground references will be used to establish a global reference system in which the target elements of the aircraft and platforms will be measured/referenced. Ground references also enable to reference the sensing systems of the image/position detection system (explained next). At least three ground references are required. There are usually more than three ground references in order to improve accuracy. At least three aircraft target points are required. Usually more of them are used in order to improve accuracy.

The measuring system also comprises a detection system (such as a position detection system) configured to reference the aircraft and the position of the scales (platforms). In other words, it is configured to obtain the position of the ground target points, aircraft target points and platforms target points in a common reference frame.

The detection system permits to establish a global reference system from the target elements disposed on the floor (ground references). The different target elements (aircraft and platforms target elements) will be measured and expressed in the global reference system. The detection system also permits to locate the platforms and the load application points within the global reference system. The detection system also permits to define the position of the aircraft within the global reference system and to identify a preestablished local reference system of the aircraft based on the position of the aircraft targets.

The detection system may use a measuring system based on photogrammetry. In this case, the measuring system has at least one image sensing means, such as camera. The position of the target points is obtained from images captured by the at least one camera (for example, two cameras, preferably working in stereo mode). Target points or elements will be identified in the images, and thus the position of the different target elements will be obtained by relating their position to well-known points (reference points, previously characterized). If a single camera is used, the photogrammetry technique is preferably combined with spatial resection algorithms or the camera is configured to move along a certain path to take images at different positions using bundle algorithms.

The detection system may alternatively use a measuring system based on laser-tracking or laser tracing. In this case, the measuring system has a laser tracker or tracer and reflectors disposed at the position of the target points.

The detection system is disposed at fixed points with respect to the aircraft. The location of these points can be chosen by the engineers or technicians performing the measurements.

The proposed method and system are applicable to aircrafts having at least three support or contact points (i.e. three landing gears or elements/fixtures to achieve the three or more contact points). They are especially suitable for tiltrotors and helicopters. Tiltrotors usually have three landing gears. Helicopters usually have two support bars. In this case, in order to achieve the three required support points, two support points are defined in one of the support bars, while the third support point corresponds to the second support bar. This may be achieved, for example, by disposing a scale under each end of one of the two support bars of the helicopter; and a third scale under the second support bar, or by using dummy wheels attached to the bars.

Tiltrotors and helicopters are more sensitive in terms of balancing and position of center of gravity due to the type of maneuvers they perform in the air. Accurately determining the CoG is especially important in helicopters, because in helicopters the CoG has a greater impact on the behavior and handling of the aircraft. As explained in Wikipedia (https://en.wikipedia.org/wiki/Tiltrotor), a tiltrotor is an aircraft which generates lift and propulsion by way of one or more powered rotors (sometimes called *proprotors*) mounted on rotating shafts or nacelles usually at the ends of a fixed wing. Almost all tiltrotors use a transverse rotor design, with a few exceptions that use other multirotor layouts. Tiltrotor design combines the vertical take-off and landing (VTOL) capability of a helicopter with the speed and range of a conventional fixed-wing aircraft. For vertical flight, the rotors are angled so the plane of rotation is horizontal, generating lift the way a normal helicopter rotor does. As the aircraft gains speed, the rotors are progressively tilted forward, with the plane of rotation eventually becoming vertical. In this mode the rotors provide thrust as a propeller, and the airfoil of the fixed wings takes over providing the lift via the forward motion of the entire aircraft. Since the rotors can be configured to be more efficient for propulsion (e.g. with root-tip twist) and it avoids a helicopter's issues of retreating blade stall, the tiltrotor can achieve higher cruise speeds and takeoff weights than helicopters.

Tiltrotors allow great flexibility for small aircrafts and lead to improved mobility. The change between helicopter-mode and fixed-wing aircraft-mode involves a redistribution of the weight of the aircraft that affects the performance of the aircraft during flight. The weight distribution and balance of the aircraft are important factors in the stability of the aircraft during operation. The weight distribution and balance also affect the fuel consumption and the environmental impact of the operation. A suitable weight distribution and balancing after loading the aircraft reduces the moment produced by the thrust force and leads to a more efficient operation of the engines, finally impacting the fuel consumption. For this reason, assessing the weight (or weight distribution) and balance of the aircraft, and thus obtaining the 3D position of the Centre of Gravity (CoG) of the aircraft, is of particular importance in tiltrotors.

In sum, using the proposed system, a two-stages procedure is applied, to obtain the position of the CoG of the aircraft.

A first aspect of the invention relates to a computer-implemented method for obtaining the position of the Centre of Gravity (CoG) of an aircraft having at least three support points, wherein a measurement platform comprising a plurality of load cells is disposed under each support point. The method comprises: performing the following actions with the aircraft disposed in a first position: obtaining the position of a plurality of ground target points disposed at the surroundings of the aircraft and establishing a ground reference system ($RS_{GROUND}$) with the ground target points; obtaining the position of a plurality of aircraft target points disposed at specific locations at the aircraft, establishing an aircraft reference system ($RS_{AIRCRAFT}$) and locating the aircraft in the ground reference system ($RS_{GROUND}$); obtaining the position of a plurality of platforms target points disposed at specific locations at the measurement platforms, establishing one platform reference system ($RS_{PLATFORM-A}$, $RS_{PLATFORM-B}$, $RS_{PLATFORM-C}$) per measuring platform from the position of the platforms target points and locating the measurement platforms in the ground reference system ($RS_{GROUND}$); at each measuring platform, measuring a force applied to each load cell; from the force applied to each load cell and from the position of each load cell in the corresponding measuring platform, calculating a position of the load application point in each measurement platform; and locating the load application point in the ground reference system ($RS_{GROUND}$); from the force applied to each measuring platform and from the position of the load application point in each measurement platforms, obtaining the position of the CoG of the aircraft in the ground reference system ($RS_{GROUND}$); calculating a 3D line containing the position of the CoG of the aircraft and the gravity axis; and transforming this 3D line to the aircraft reference system ($RS_{AIRCRAFT}$); repeating the former actions with the aircraft disposed in a second position, in which the position in height of at least one of the support points of the aircraft is modified with respect to the position in height of the at least one of the support points when the aircraft is in the first position, thus obtaining a second 3D line containing the position of the CoG of the aircraft; from the first and second 3D lines containing the center-of-gravity of the aircraft, obtaining the 3D coordinates of the center-of-gravity of the aircraft.

In embodiments of the invention, the position of the load application point in each measurement platform is calculated in the respective platform reference system ($RS_{PLATFORM-A}$, $RS_{PLATFORM-B}$, $RS_{PLATFORM-C}$).

In embodiments of the invention, the platform reference systems ($RS_{PLATFORM-A}$, $RS_{PLATFORM-B}$, $RS_{PLATFORM-C}$) are transformed to the ground reference system ($RS_{GROUND}$) through a Homogeneous Transformation Matrix; and the aircraft reference system ($RS_{AIRCRAFT}$) is transformed to the ground reference system ($RS_{GROUND}$) through a Homogeneous Transformation Matrix.

In embodiments of the invention, the 3D coordinates of the center-of-gravity of the aircraft are obtained either by calculating the intersection of the first and second 3D lines or by applying an algorithm for obtaining closest points between the two 3D lines.

In embodiments of the invention, the positions of the plurality of ground target points, aircraft target points and platforms target points are obtained with a measuring system based on photogrammetry, the measuring system comprising at least one camera, wherein the position of the plurality of target points is obtained from images captured by said at least one camera. In embodiments of the invention, the positions of the plurality of ground target points, aircraft target points and platforms target points are obtained with a measuring system based on laser-tracking, the measuring system comprising a laser tracker and a plurality of reflectors disposed at the position of the target points.

In embodiments of the invention, the aircraft is a tiltrotor and the at least three support points are one front landing gear and two rear landing gears.

In embodiments of the invention, the aircraft is a helicopter having two support bars, wherein the at least three support points are disposed as follows: two support points are located in one of the two support bars and a third support point is located in the other support bar.

In embodiments of the invention, the Z axis of the ground reference system ($RS_{GROUND}$) is aligned with the gravity direction or a relationship between the Z axis of the ground reference system ($RS_{GROUND}$) and the gravity direction is known.

A second aspect of the invention relates to a system for obtaining the Centre of Gravity (CoG) of an aircraft having at least three support points. The system comprises: a measurement platform disposed under each support point, wherein each measurement platform comprises a plurality of load cells, wherein each measuring platform is configured to measure a force applied to each load cell; elevating means disposed under at least one of the measurement platforms and corresponding support point, configured to modify the position in height of said at least one support point and measurement platform in order to perform measurements in a modified position in height of the aircraft; a plurality of ground target points disposed at the surroundings of the aircraft, a plurality of aircraft target points disposed at specific locations at the aircraft and a plurality of platforms target points disposed at specific locations at the measurement platforms; means for obtaining the position of the ground target points, aircraft target points and platforms target points; processing means for: establishing a ground reference system ($RS_{GROUND}$) with the ground target points; establishing an aircraft reference system ($RS_{AIRCRAFT}$) with the aircraft target points and locating the aircraft in the ground reference system ($RS_{GROUND}$); and establishing one platform reference system ($RS_{PLATFORM-A}$, $RS_{PLATFORM-B}$, RSPLATFORM-C...) per measuring platform with the platforms target points and locating the platforms in the ground reference system ($RS_{GROUND}$); from the force applied to each load cell and from the position of each load cell in the corresponding measuring platform, calculating a position of the load application point in each measurement platforms; and locating the load application point in the ground reference system; from the force applied to each measuring platform and from the position of the load application point in each measurement platforms, obtaining the position of the CoG of the aircraft in the XY plane of ground reference system ($RS_{GROUND}$); calculating a 3D line containing the position of the CoG of the aircraft by using the obtained position in the XY plane and the gravity axis; and transforming this 3D line to the aircraft reference system ($RS_{AIRCRAFT}$); obtaining the 3D coordinates of the center-of-gravity of the aircraft from at least two 3D lines containing the position of the CoG of the aircraft obtained with the aircraft in at least two different poses.

In embodiments of the invention, the means for obtaining the position of the ground target points, aircraft target points and platforms target points comprises a measuring system based on photogrammetry, the measuring system comprising at least one camera, wherein the position of the plurality of target points is obtained from images captured by said at least one camera.

In embodiments of the invention, the means for obtaining the position of the ground target points, aircraft target points and platforms target points comprises a measuring system based on laser-tracking, the measuring system comprising a laser tracker and a plurality of reflectors disposed at the position of the target points.

In embodiments of the invention, the elevating means is configured to ensure a vertical elevation of the support point without significant change in the inclination of the upper surface of the platform.

In embodiments of the invention, the load cells of the measurement platforms disposed under the one or more support points which can be elevated are configured to measure three components (X, Y, Z) of the applied force.

A third aspect of the invention relates to a computer program product comprising computer program instructions/code for performing the method of the first aspect of the invention.

A fourth aspect of the invention relates to a computer-readable memory/medium that stores program instructions/code for performing the method of the first aspect of the invention.

Balance information may be obtained from the pose of the target elements in the aircraft, providing information about the pitch and roll axis of the aircraft.

The centre of gravity and optionally the balance of the aircraft provide enough information to assess the behaviour of the aircraft during operation of the aircraft and how the aircraft should be loaded, for example for the CoG to be kept within preestablished limits. This assessment provides information about eventual modifications in the aircraft needed to achieve a better performance during use of the aircraft, leading to the improvement of the behaviour and efficiency of the aircraft during maneuvers.

The proposed method and system may be integrated in an advanced flight control system based on information about the weight of the aircraft, position of the CoG thereof and additional information to achieve a suitable balance of the aircraft. Therefore, the proposed method and system contribute to the optimization of the aircraft configuration, engine installation and flight trajectories, among others.

Among the advantages of the proposed method with respect to conventional ones, it allows the obtaining of a third component (Z coordinate) of the CoG, which is particularly advantageous in tiltrotors and helicopters, which are more liable to stability problems during flight if weight and load distribution are not accurately controlled. It allows direct measurement of the pitch and roll angles of the aircraft. The use of photogrammetry allows fast measurement of the position of different elements in the aircraft and platforms in a common reference system. Besides, unlike conventional systems, the proposed method does not need to physically balance the aircraft by adjusting its pitch and roll angles.

Additional advantages and features of the invention will become apparent from the detail description that follows and will be particularly pointed out in the appended claims.

BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figures 1 and 2 illustrate two views of an aircraft having three landing gears, under which there is a respective measurement platform or scale. An elevating means is disposed under the front landing gear for lifting the front part of the aircraft. In Figure 2, a measuring system for assessing the 3D centre of gravity of the aircraft according to an embodiment of the invention, is also shown.

Figure 3 shows three platforms and several ground target points according to an embodiment of the invention.

Figure 4a shows a platform according to an embodiment of the invention, including also platform target points. Figure 4b shows another view of the platform of Figure 4a, showing an internal distribution of the load cells.

Figure 5 shows the aircraft of Figures 1 and 2 including several aircraft target reference points according to an embodiment of the invention.

Figure 6 illustrates a view from a first camera situated as shown in Figure 2.

Figure 7 illustrates a view from a second camera situated as shown in Figure 2.

Figures 8a and 8b illustrate the reference systems used in the method of the invention: a ground reference system, an aircraft reference system and one platform reference system per platform. The ground reference system is fixed, while the aircraft reference system and some platform reference systems move when the elevating means acts moving the aircraft during measurement.

Figures 9a-9c show respectively pitch, roll and yaw angles with respect to the ground reference system.

Figure 10a schematically shows the line perpendicular to the floor plane (XY) containing the position of the CoG in the floor plane (XY) as obtained from measurements carried out in a first position of the aircraft. Figure 10b schematically shows the line perpendicular to the floor plane (XY) containing the position of the CoG in the floor plane (XY) as obtained from measurements carried out in a second position of the aircraft.

Figure 11 shows a schematic representation of how the three coordinates of the CoG of the aircraft can be obtained in the aircraft reference system $RS_{AIRCRAFT}$ according to an embodiment of the invention.

**DESCRIPTION OF A WAY OF CARRYING OUT THE INVENTION**

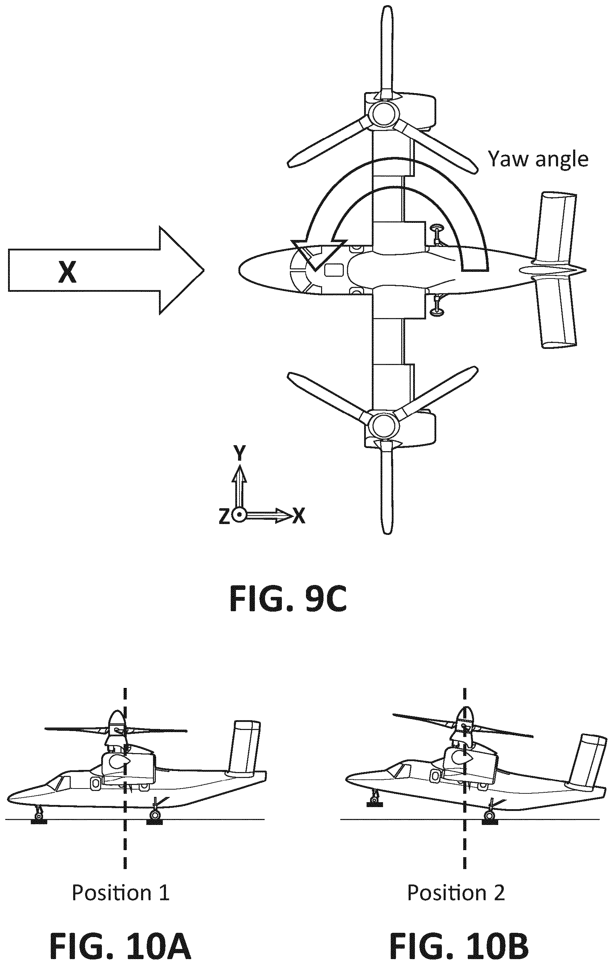

A method and system for obtaining the position of the Centre of Gravity (CoG) of an aircraft in a 3D space is disclosed next. The calculation of the CoG of the aircraft in 3D is performed following a process in at least two steps. More steps can be added in order to improve accuracy of the calculation. Each step involves performing certain measurements of the aircraft in a different position or pose. In a preferred embodiment, measurements in two different positions (poses) of the aircraft are performed. Given a certain position in height of at least one support point of the aircraft in the first pose, the position in height of said at least one support point is modified in the second pose with respect to its position in the first pose. For example, in the first pose all the landing gears of the aircraft are on the floor (at ground level). In particular, measurement platforms or scales disposed under each landing gear are in contact with the floor. In other words, the platforms are disposed at the same Z coordinate in a ground reference system. In the second pose, at least one landing gear (for example, the front landing gear) is elevated. Figures 10a and 10b, referring to an aircraft having three landing gears, show the two positions considered in this embodiment.

Next, the system used for performing the method is disclosed. The required measurements and corresponding calculations are explained considering the first position (pose) of the aircraft. The measurements and calculations will then be repeated having the aircraft in the second position (pose). Three different groups of targets or target points are used to take the required measurements and perform subsequent calculations: ground target points, aircraft target points and platforms target points. Each group of target points permits to obtain a reference system (ground reference system, aircraft reference system and as many platform reference systems as actual platforms) in each of the two (or more, as the case may be) positions or poses. The ground reference system is the main one as it is fixed, because its target points do not modify their position in the different poses (rather, it is the aircraft and some platforms which are elevated in the second pose with respect to the ground, which remains fixed). For this reason, the aircraft reference system and platform reference systems are related to the ground reference system using suitable mathematical computations. Then, a line containing the CoG in each pose or position is obtained in the ground reference system. Each line is then translated into the aircraft reference system. With the obtained two lines in the aircraft reference system, the CoG of the aircraft can be calculated. The method and system are explained in detail next.

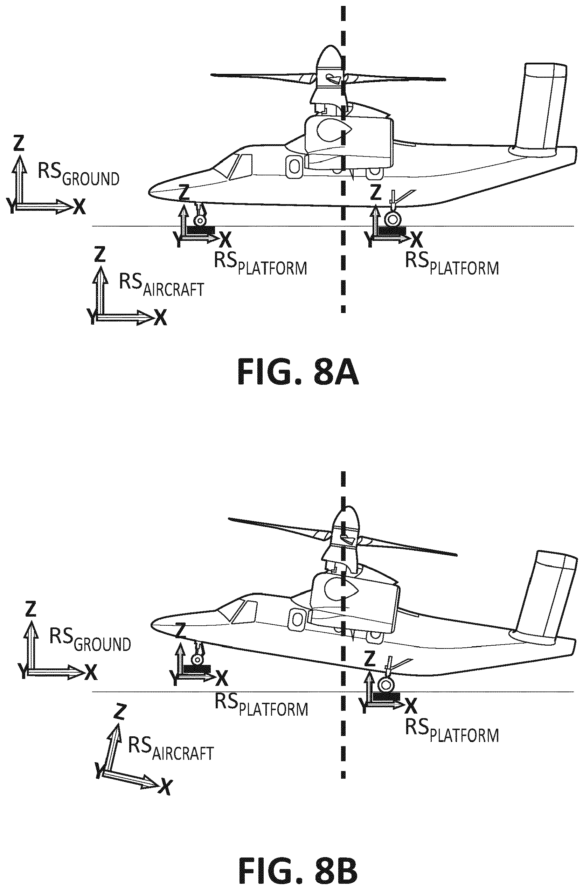

The CoG of the aircraft is represented as a 3D point (x, y, z). The coordinates of this point (x, y, z) will be referenced with respect to an aircraft reference system $RS_{AIRCRAFT}$ shown for example in Figures 8a and 8b, in order to allow the use of this information for balancing the aircraft and conducting safe and efficient flight.

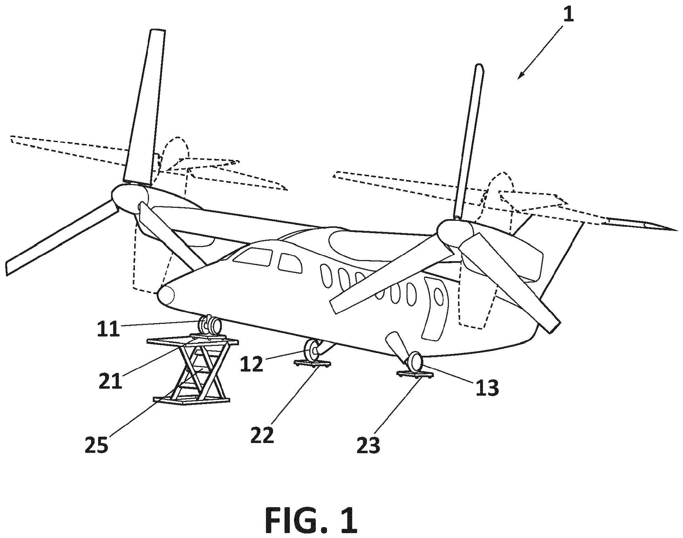

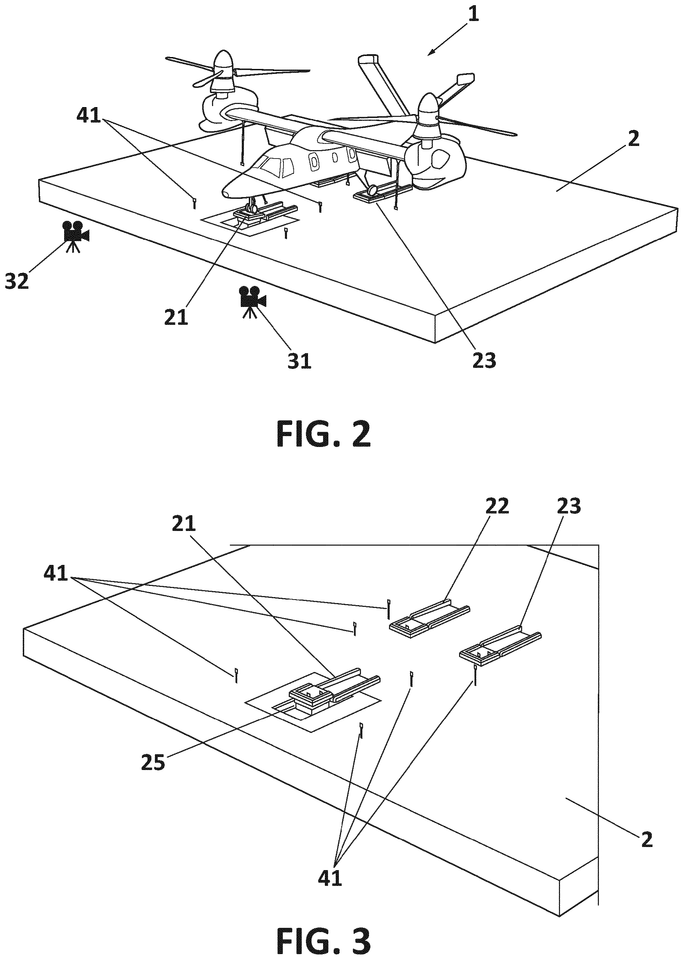

Figures 1 and 2 show two different views of an aircraft 1. The shown aircraft 1 is a tiltrotor having one front landing gear 11 and two rear landing gears 12, 13 having their support points in contact with ground. However, the invention is applicable to any aircraft having at least three support points and a measuring platform under each support point. For example, if the aircraft is a helicopter instead of a tiltrotor, two support points can be defined in one of the support bars of the helicopter, while a third support point is defined at any point in the other support bar of the helicopter. In this case, a measurement platform (scale) is disposed for example under each end of one support bar, and a third measurement platform (scale) is disposed under the other support bar. In Figure 2, the aircraft 1 has the three landing gears 11-13 in contact with the floor 2. Some elements comprised in the measuring system of the invention are depicted: three measurement platforms or scales 21-23 disposed under each landing gear 11-13 and an elevating means 25 disposed under the platform 21 located under the front landing gear 11 for lifting the front landing gear 11 and corresponding platform 21 when required, while maintaining the platform 21 in horizontal position (same XY plane as the floor plane, but different height Z), that is to say, parallel to the floor 2. Figure 2 also shows other elements of the measuring system for assessing the CoG of the aircraft. In particular, two cameras 31-32 are shown.

The platforms (also referred to as measuring platforms or scales) 21-23 are used for measuring the weight supported by each landing gear and for identifying the force application point in each platform.

The elevator 25 (also referred to as elevating means) is used for lifting a landing gear (usually the front landing gear) of the aircraft and corresponding measuring platform for enabling measurements in a lifted position. Elevating the front landing gear 11 and platform 21 disposed under the front landing gear 11 enables performing measurements with different aircraft inclination (in different positions or poses of the aircraft). In Figure 1 the front landing gear 11 has been lifted by means of the elevating means 25. Different conventional elevating means may be used, such as a scissor lift, or a four-columns elevator actuated by a rack and pinion lift mechanism, or any other suitable elevating means. Both for measurements on the ground and for measurements with aircraft inclination, it is assumed that the aircraft 1 and the landing gears 11-13 behave as a rigid solid body. The elevator 25 must ensure a vertical elevation without significant change in the inclination of the top surface of the platform 21. In other words, the elevated platform 21 must remain substantially parallel to the floor 2 (the normal component of the platform top surface must be in the direction of the gravity force).

The measuring system also has a plurality of target points or target elements disposed at specific locations at the aircraft and its surroundings, for establishing a ground reference system and for referencing the aircraft and platforms with respect the ground reference system. The aircraft and platforms are related to the ground reference system through respective aircraft reference system and platforms reference system.

The measuring system has detection means for obtaining the position of the target points. In the shown embodiment (see for example Figure 2), the measuring system has an image detection system comprising two cameras 31-32 for capturing pictures of the target points. The cameras 31, 32 are used to capture images which will be used to establish a common (ground) reference system $RS_{GROUND}$, to reference the aircraft 1 and the platforms 21-23; in other words, images are used to locate the position of target points 41-43 in 3D using technologies of photogrammetry. Each camera 31-32 takes at least one picture. The photogrammetry techniques may alternatively be based on the use of a single camera combined with spatial resection algorithms or a single camera moving according to a certain path so that it can take images at different positions using bundle algorithms. The measuring system may alternatively use other detection means different from photogrammetry, such as a laser tracker and reflectors in the target points. When laser tracking is used, the target points are reflectors, and the points at which reflectors are disposed are directly measured. The position of the target points is then obtained by applying conventional laser tracking algorithms.

Photogrammetry (or alternative techniques, such as laser tracking) permits to establish the common reference system $RS_{GROUND}$ and to reference the aircraft 1, platforms 21-23 and force application points within the platforms, in the common reference system $RS_{GROUND}$. By applying conventional photogrammetry software, for example implementing triangulation algorithms, the position of the different targets 41-43 (for example captured in each image if photogrammetry is used) is established.

A characterization of the targets (ground, aircraft and platforms targets) has been previously performed by external means (for example, a laser tracker) to establish the relative distance between points belonging to each element (ground, aircraft and platforms) to obtain well-known absolute location of the targets in their corresponding reference system (ground targets in the $RS_{GROUND}$, aircraft targets in the $RS_{AIRCRAFT}$, and platform targets in the $RS_{PLATFORM}$). This can also be established by design from a CAD model.

With the position in each image of the ground targets and their well-known absolute location, the common reference system $RS_{GROUND}$ is established. Then, by identifying the aircraft target points 43, J1-J5 in each picture, a comparison with the known position of these points in the aircraft reference system $RS_{AIRCRAFT}$ is performed, and the relation between this aircraft reference system $RS_{AIRCRAFT}$ and the $RS_{GROUND}$ is obtained, resulting in a homogeneous transformation matrix. In this way, the aircraft target points 43, J1-J5 are referenced with respect to the ground reference system $RS_{GROUND}$. And by identifying the platform target points 42 in each picture, a comparison with the known position of these points in the platform reference systems $RS_{PLATFORM}$ is performed, and the relations between these platform reference systems $RS_{PLATFORM}$ and the ground reference system $RS_{GROUND}$ are obtained, resulting in a homogeneous transformation matrix for each platform. In this way, the platform target points 42 are referenced with respect to the ground reference system $RS_{GROUND}$. In sum, measured points are compared with well-known absolute locations of the targets, so that relationships between the different reference systems can be established. Photogrammetry and laser tracking techniques are conventional and are out of the scope of the present invention. Photogrammetry is for example disclosed in Close Range Photogrammetry: Principles, Techniques and Applications. Thomas Luhmann, Stuart Robson, Stephen Kyle, Ian Harley. Editor: John Wiley and Sons Ltd. ISBN10 0470106336; ISBN13 9780470106334.

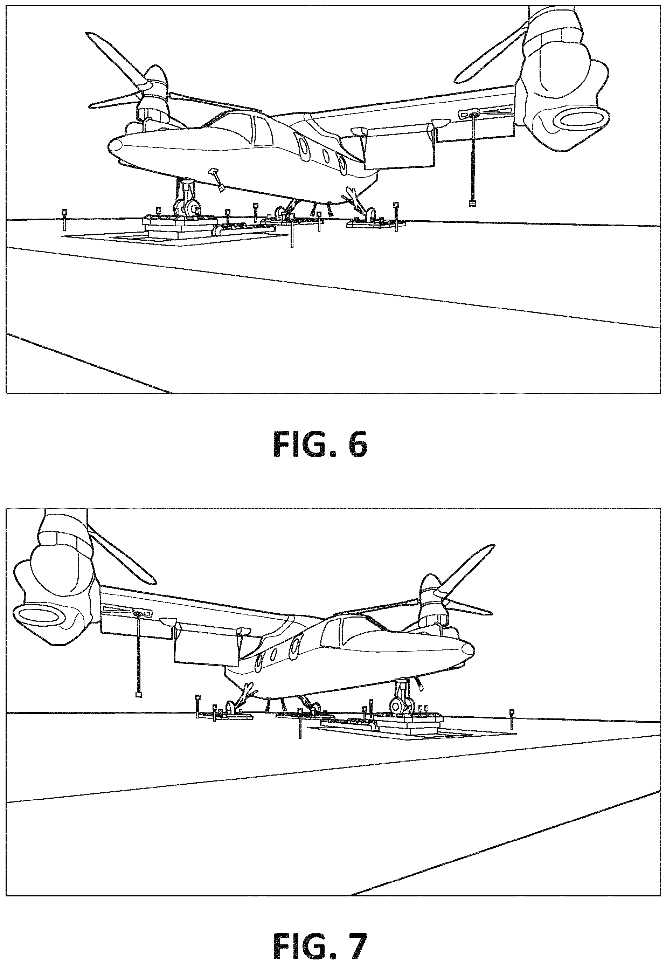

The at least one camera 31, 32 can be disposed at any location in the vicinity of the aircraft 1, provided that they manage to capture the target points 41-43. When two cameras are used, one skilled in the art will understand that it is not necessary that all the cameras manage to capture all the target points, provided that some target points are captured by more than one camera, so that suitable relationships among target points can be established. In the embodiment shown in Figure 2 the image detection system comprises two cameras 31, 32. The cameras 31, 32 are disposed at selected points with respect to the aircraft 1. For example, the cameras may be disposed on predefined marks on the floor, selected in such a way that the cameras 31-32 have line of sight with the target points to be measured. In a particular embodiment, each camera 31, 32 captures all the target points 41-43. The location of the cameras 31-32 is usually chosen according to different circumstances, such as size and shape of the aircraft, characteristic of cameras, type of target elements, among others. The cameras 31-32 are conventional ones and are out of the scope of the invention. The cameras 31-32 must be suitable to identify the target points 41-43, meaning that they must have enough resolution to capture the targets with enough accuracy. For example, when infrared targets are used, the cameras 31-32 must capture infrared images. In the shown embodiment, when the cameras 31-32 are situated as shown in Figure 2, the view from camera 31 is shown in Figure 6 and the view from camera 32 is shown in Figure 7.

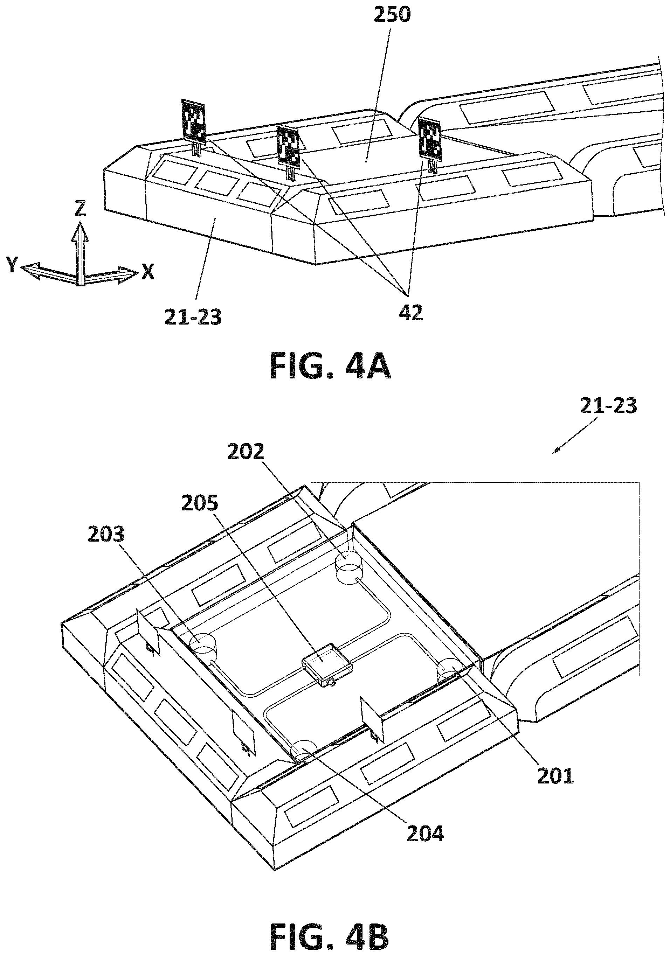

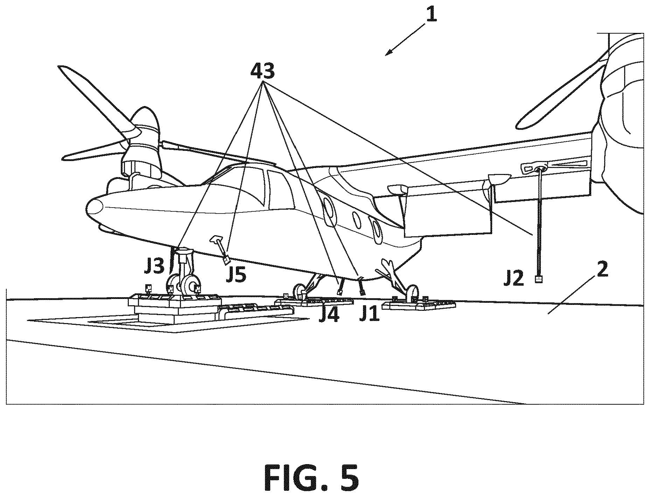

Target points include ground target points 41 as shown for example in Figures 2 and 3, aircraft target points 43, J1-J5 as shown for example in Figure 5, and platform target points 42 as shown for example in Figure 4a. The different groups of target points provide enough information to establish a 3 axes reference system.

As will be apparent from the current description, ground target points 41 are used for establishing a ground reference system $RS_{GROUND}$; aircraft target points 43 are used for establishing an aircraft reference system $RS_{AIRCRAFT}$ and its relationship with the ground reference system $RS_{GROUND}$; and platform target points 42 are used for establishing several platform reference systems $RS_{PLATFORM}$ (one per platform) and their relationship with the ground reference system $RS_{GROUND}$. The different reference systems are shown in Figures 8a and 8b. Usually, the Z axis of the ground reference system $RS_{GROUND}$ is aligned with the gravity direction. Alternatively, a relationship between the Z axis of the ground reference system $RS_{GROUND}$ and the gravity direction is known or established. As shown in Figure 8b, the aircraft reference system $RS_{AIRCRAFT}$ usually changes its orientation when the aircraft is lifted, while the ground reference system $RS_{GROUND}$ remains unchanged. Regarding the platforms 21-23, when the front platform 21 is lifted, the direction of the Z-axis is maintained unchanged (parallel to the gravity axis) (or, in other words, the surface of the platform on which the support point is located remains parallel to the floor). In the shown embodiment the rear platforms 22-23 do not move (elevate); however, in different embodiments they could also be lifted, behaving like platform 21.

Ground target points 41 are target points disposed on the floor 2, at the surroundings of the aircraft 1. Ground target points 41 are used to establish a global reference system (floor reference system, $RS_{GROUND}$) in which the target elements of the aircraft and platforms will be measured and referenced. Because the position of the ground target points 41 is fixed and well-known, they enable to establish a ground reference system $RS_{GROUND}$, also providing a way to establish a scaling of the images. The position of the ground target points 41 has been previously measured or calibrated using conventional means. For example, it has been measured with a measuring system, such as a laser tracker or photogrammetry. The ground reference system $RS_{GROUND}$ is established from at least one image captured by each camera 31-32, in particular from the ground target points 41 as captured in the at least one image. The ground reference system $RS_{GROUND}$ allows the location of the platforms 21-23 (in particular, the platform target points) and the aircraft 1 (in particular, the aircraft target points) in the common reference system (the ground reference system $RS_{GROUND}$). In other words, ground target points 41 are used to establish a ground reference system $RS_{GROUND}$ in which target elements of the aircraft and platforms will be measured. At least three ground target points 41 are required. Preferably more than three ground target points 41 are used in order to improve accuracy. Figure 3 shows six exemplary ground target points 41.

In order to establish the ground reference system $RS_{GROUND}$, the two cameras 31, 32 take measurements (images) with the aircraft 1 disposed in the first position or pose, in which the three landing gears 11-13 are on the floor; in particular, the three measurement platforms or scales 21-23 disposed under each landing gear 11-13 are in contact with the floor; in other words, the three platforms 21-23 are disposed at the same Z coordinate in the ground reference system $RS_{GROUND}$.

It is remarked that the position of the ground target points 41 and the obtained ground reference system $RS_{GROUND}$ is the same in the first and second poses of the aircraft 1; however, it is recommended to recalculate the ground reference system $RS_{GROUND}$ in each pose and the position of the ground target points 41. Images may be taken in additional poses of the aircraft. In other words, although not required for establishing the ground reference system $RS_{GROUND}$, as ground target points 41 do not move/change in the first and second position or pose, similar images can be taken with the aircraft being in a second position or pose (see for example Figure 1), in which the front landing gear 11 is elevated, while the two rear landing gears 12-13 remain in contact with the floor, in such a way that the aircraft 1 is inclined with respect to the floor (XY plane).

Aircraft target points 43 are used for establishing an aircraft reference system $RS_{AIRCRAFT}$ and its relationship with the ground reference system $RS_{GROUND}$. As shown in Figure 5, there is a plurality of aircraft target points 43 disposed at reference points of the aircraft 1. At least three aircraft target points are required. Figure 5 shows five exemplary aircraft target points 43, specifically referred to as J1-J5. The position in the aircraft 1 of the aircraft target points 43, J1-J5 is well-known because it has been previously measured or calibrated using conventional means. For example, it has been measured with a measuring system, such as a laser tracker or photogrammetry or established by design from the 3D CAD geometry. Aircraft target points 43, J1-J5 will be identified in the images captured by the cameras 31-32, and thus their position will be related to the well-known position of the ground target points 41 and therefore to the ground reference system $RS_{GROUND}$. Therefore, from the images taken by cameras 31, 32 the aircraft target points are identified and their positions in the common reference system $RS_{GROUND}$ will be defined. An arbitrary aircraft reference system $RS_{AIRCRAFT}$ is available as a reference defined by the user or from a design of the aircraft (for example, a CAD design). Therefore, the position of the aircraft target points in this arbitrary aircraft reference system $RS_{AIRCRAFT}$ is well-known. The aircraft target points measured by the cameras 31, 32, and the information of the known position of these points (by design and previously measured by a laser tracker or a similar system) in the arbitrary aircraft reference system $RS_{AIRCRAFT}$ allows to transform or correlate the origin and axes of the arbitrary aircraft reference system, to a reference system of the measuring system, for example by a least squared calculation. The aircraft reference system $RS_{AIRCRAFT}$ has been referenced with respect to the ground reference system $RS_{GROUND}$, for example using a homogeneous transformation matrix. In sum, the idea is to work with a plurality of points of which its relative position is well-known. While they can be expressed in any reference system, the aircraft reference system $RS_{AIRCRAFT}$ is chosen because it provides pose information (angles) of the aircraft. In sum, the aircraft target points are measured with respect to the ground reference system $RS_{GROUND}$ and then transported to the aircraft reference system $RS_{AIRCRAFT}$. The result is a mathematical description of the aircraft and the aircraft reference system $RS_{AIRCRAFT}$ in a general reference system ($RS_{GROUND}$), allowing to know the position and orientation of the aircraft in the general reference system by means of a Homogeneous Transformation Matrix. In addition to ground target points 41 disposed on the floor 2 and aircraft target points 43, J1-J5 disposed at the aircraft 1, there are also platform target points 42 disposed on the platforms 21-23 as shown in Figure 4a. Platform target points 42 are used for establishing a platform reference system $RS_{PLATFORM}$ ($RS_{PLATFORM-A}$, $RS_{PLATFORM-B}$, $RS_{PLATFORM-C}$) per platform 21-23 and their relationship with the ground reference system $RS_{GROUND}$. Each platform reference system $RS_{PLATFORM-A}$, $RS_{PLATFORM-B}$, $RS_{PLATFORM-C}$ will be referenced with respect to the ground reference system $RS_{GROUND}$, for example using three respective homogeneous transformation matrices. As shown in Figure 4a, there is a plurality of platform target points 42 disposed at reference points of the platforms 21-23. At least three platform target points are required. In the embodiment shown in Figure 4a, three platform target points 42 are disposed on each platform 21-23. The position in the platform 21-23 of the platform target points 42 is well-known because it has been previously measured or calibrated using conventional means. For example, it has been measured with a measuring system, such as a laser tracker or a coordinate measurement machine or established by design. Platform target points 42 define a respective platform reference system by design (origin plus three axis). With the measuring system (for example, images captured by cameras 31-32), the platform target points 42 are measured and compared with design values thereof. Platform target points 42 will be identified in the images captured by the cameras 31-32, and thus their position will be related to the well-known position of the ground target points 41 and therefore to the ground reference system $RS_{GROUND}$. Therefore, from the images taken by cameras 31, 32 the platform target points are identified and their positions in the common reference system $RS_{GROUND}$ will be defined. An arbitrary platform reference system $RS_{PLATFORM}$ is available as a reference defined by the user or from a design of the platform (for example, a CAD design). So, the position of the platform target points in this arbitrary platform reference system is well-known. The platform target points measured by the cameras 31, 32, and the information of the known position of these points (by design and previously measured by a laser tracker or a similar system) in the arbitrary platform reference system allows to transform or correlate the origin and axes of the arbitrary platform reference system, to a reference system of the measuring system, for example by a least squared calculation. The platform target points 42 are therefore used to locate the platforms 21-23 in the ground reference system $RS_{GROUND}$ using the platform reference systems $RS_{PLATFORM-A}$, $RS_{PLATFORM-B}$, $RS_{PLATFORM-C}$, to then obtain the point of each platform 21-23 on which force is being applied. The result is a mathematical description of the platforms and the reference systems ($RS_{PLATFORM-A}$, $RS_{PLATFORM-B}$, $RS_{PLATFORM-C}$) in a general reference system ($RS_{GROUND}$), allowing to know the position and orientation of the different platforms in the general reference system by means of a Homogeneous Transformation Matrix.

Therefore, from the information extracted from the images captured by the cameras 31, 32, the position of the platform target points 42 and aircraft target points 43 will be established with respect to the position and orientation of the ground reference system $RS_{GROUND}$ defined by the ground target points 41 (and identified in the captured images). This also allows the identification of the platform reference systems $RS_{PLATFORM-A}$, $RS_{PLATFORM-B}$, $RS_{PLATFORM-C}$ and aircraft reference system $RS_{AIRCRAFT}$ by comparison with previously calibrated data, resulting in mathematical descriptions of the position and orientation of the different elements in the ground reference system $RS_{GROUND}$.

A platform 21-23 is disposed under each landing gear 11-13. Figure 4a shows an exemplary platform 21-23. The platform is configured to measure the weight it supports, that is to say, the weight supported by the landing gear 11-13 under which the platform is disposed. Such weight is the weight applied to each platform. More precisely, the weight of the aircraft is shared to the different landing gears and each platform supports a force proportional to the shared weight. To achieve this goal, each platform 21-23 is equipped with a plurality of load cells 201-204 (also referred to as force sensors) and associated measurement electronics 205. In Figure 4b, the upper surface 250 (surface to be in contact with the corresponding landing gear or tyre) of the platform shown in Figure 4a is transparent to show the load cells 201-204 and measurement electronics 205. In this embodiment four load cells 201-204 are used and they are coplanar and parallel to the upper surface 250. In embodiments of the invention, the load cells included in the rear platforms 22-23 measure only the Z component of the applied force, i.e. the gravity component, while the front platform 21 can measure forces in the three components (X, Y, Z).

The position of each load cell 201-204 within the platform 21-23 is well-known (previously characterized). Each force sensor measures the Z component of the force applied on it. The momentum is obtained from the force measurement and from the position of each load cell 201-204 within the platform. The weight measured at each platform 21-23 is the sum of the forces captured by each load cell divided by the gravitational constant. Thus, from the forces applied at each of the load cells 201-204, a resultant of the forces is obtained. Also, from the force values or measurements (four values in this case, one per load cell) captured by the load cells of each measurement platform 21-23 and from the position of each load cell, a force application point $(X_m, y_m)$ on each platform 21-23 is calculated in the corresponding platform reference system $RS_{PLATFORM}$ by applying or computing forces and momentums calculation. The force application point is understood as a point on the platform on which a force equivalent to the weight, is applied. The load cells are conventional and are out of the scope of the present invention. A skilled person in the art knows how to obtain the weight and force application point from the measurements captured by the load cells and position of the load cells. The surface 250 of the platform is designed to be rigid enough not to be significantly deformed by the weight it supports. Non-limiting examples of materials of which the platform may be made are steel, aluminum, carbon fibre and mixtures thereof. The load application point is transformed or mapped to the ground reference system $RS_{GROUND}$.

In embodiments of the invention, the target points 41-43 have a reflecting surface that enables their identification in the pictures. The target points 41-43 may have different shapes, such as circular, oval, square or rectangular. They may also have other shapes, such as more complex shapes or they can have labels, for example when some of them must be differentiated from some others. Preferably the dimensions of each target point 41-43 has been previously characterized in order to define and establish its center with respect to a reference element. For example, regarding the platform target points, the center of a platform target point 42 can be established with respect to a platform plane. Both their position and orientation are relevant. For example, both the position and orientation of a platform target point may have an impact on the establishment of the force application point within the ground reference system $RS_{GROUND}$. Besides, when the platform target points have circular shape, the elliptical shape captured by an image due to the influence of the perspective on the circular shape, also provides information about the orientation of the platform target point.

The ground target points 41 are preferably distributed along the measurement scenario, i.e. they are not all in a same area of the measuring scenario, so that they will not be in a same area of an image. Something similar applies to the platform target points 42 in order for a platform 21-23 to be correctly characterized.

In sum, there are different groups of target points: ground target points 41, platform target points 42 and aircraft target points 43. Each group of target points has been previously characterized, which means that the relative positions of the points are identified in a reference system. For example, the aircraft target points 43 are characterized with respect to an aircraft reference system to know the relevant angles; and the platform target points 42 are characterized with respect to a platform reference system which permits to locate the load cells for calculating a force application point. This means that, prior to performing the actual measurements of the method, the following data is established: Calibrated position of ground target points 41 in a ground reference system $RS_{GROUND}$; Calibrated position of aircraft target points 43 in an aircraft reference system $RS_{AIRCRAFT}$; Calibrated position of platform target points 42 in their own reference systems $RS_{PLATFORM-A}$, $RS_{PLATFORM-B}$, $RS_{PLATFORM-C}$; and Calibrated position of the load cells 201-204 in each platform reference systems $RS_{PLATFORM-A}$, $RS_{PLATFORM-B}$, $RS_{PLATFORM-C}$. In other words, a previous characterization of the target elements 41, 42, 43 is required, meaning that accurate positions of the ground target elements 41, relative positions of aircraft target points 43 in the $RS_{AIRCRAFT}$, and relative positions of platform target points 42 in the $RS_{PLATFORM-A}$, $RS_{PLATFORM-B}$, $RS_{PLATFORM-C}$ are required to establish the position and orientation of the reference systems. This previous characterization can be done by applying any conventional characterization method (laser tracker, photogrammetry, Coordinate Measuring Machine, 3D CAD design, among others) and is out of the scope of the invention. On the other hand, measurements (such as images) of the target points made with the measurement system enables to locate them in the ground reference system. With the former information, the different reference systems can be mathematically identified and related to the ground reference system.

Then, in the first position of the aircraft, using measurement techniques (for example, from the images captured by the cameras 31-32 and applying photogrammetry techniques), the following information is measured and obtained: position of the ground target points 41; position of the platforms target points 42; and position of the aircraft target points 43.

Then, the force applied in each platform 21-23 is measured using the load cells 201-204, which position in each platform 21-23 is well-known. In embodiments of the invention, the Z component (also called vertical reaction forces) of the applied force is measured in all platforms 21-23; while the X and Y components (also called lateral forces) of the applied force is measured only in the load cells disposed in the front landing gear platform. More precisely, the load-cells 201-204 measure the weight supported by each platform 21-23. The transformation between forces and weights is a factor corresponding to the gravitational constant.

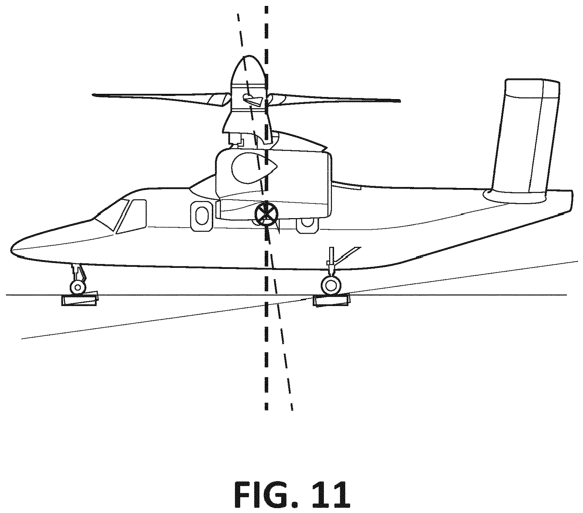

The position of the load cells 201-204 at each platform is well-known. The applied force (force value) measured by each load cell 201-204 is also available (measured). With this information, at each platform 21-23, a load application point is calculated by means of forces and momentums computation. The relationship (HTM - Homogeneous Transformation Matrix) between each platform reference system $RS_{PLATFORM-A}$, $RS_{PLATFORM-B}$, $RS_{PLATFORM-C}$ and the ground reference system $RS_{GROUND}$ permits to locate these points in the ground reference system $RS_{GROUND}$. With the total (global) force applied at each platform and the load application points, a computation of forces and momentums is calculated at the ground reference system $RS_{GROUND}$, thus obtaining a 2D position of the CoG at the ground reference system $RS_{GROUND}$. This 2D position is in the ground plane (XY) and it is enriched with a vector indicating the gravity axis, resulting in a 3D description of a line containing the CoG. This 3D line is then taken to the aircraft reference system $RS_{AIRCRAFT}$ by a HTM transformation. The process of obtaining a line containing the CoG is repeated for each aircraft pose (for example, first having the aircraft on the ground and second having the front landing gear in an elevated position), as illustrated in Figures 10a and 10b. It is remarked that because the relationship between a ground reference system $RS_{GROUND}$ and an aircraft reference system $RS_{AIRCRAFT}$ has already been established, the resulting line can be represented in both reference systems. Then, the different lines obtained from each pose are represented in the aircraft reference system $RS_{AIRCRAFT}$, identifying the common or crossing point, that corresponds to the 3D CoG expressed in the aircraft reference system $RS_{AIRCRAFT}$, as shown in Figure 11.

Next, a particular example of how different computations from data obtained from sensors and images are performed, is explained.

The images captured by cameras 31-32 and signals captured by sensors (such as load cells 201-204) are processed in processing means, for example in a conventional computer or PLC (*Programmable Logic Controller*). The processing means may have different software modules configured to perform the different calculations, which are then combined to provide a final result (for example a position of the CoG of the aircraft). The following calculations are performed in the processing means using corresponding mathematical algorithms embedded in the software modules:

1. The calibrated and measured positions of the ground target points 41 are compared and the ground reference system $RS_{GROUND}$ is obtained, for example by applying a least squares method. This allows the obtaining of a Homogeneous Transformation Matrix (HMT) that transforms the measured positions (ground, platforms and aircraft) to the known ground reference system $RS_{GROUND}$. The Z axis of this reference system is aligned with the gravity direction. In other words, all measured target points 41-43 are represented in the ground reference system $RS_{GROUND}$.

2. The calibrated and measured positions of the aircraft target points 43 are used to obtain a HMT to relate the ground reference system $RS_{GROUND}$ and the aircraft reference system $RS_{AIRCRAFT}$. This is done for example by applying a least squares calculation of the geometrical transformation between both reference systems. This HMT allows the identification of the position and orientation of the aircraft in the ground reference system $RS_{GROUND}$.

3. The calibrated and measured positions of the platform target points 42 are used to obtain a HMT to relate the reference systems of the platforms 21-23 ($RS_{PLATFORM-A}$, $RS_{PLATFORM-B}$, $RS_{PLATFORM-C}$) with the ground reference system $RS_{GROUND}$. These are done for example by applying a least squares calculation of the geometrical transformation between each reference systems pair. These HMTs allow the identification of the position and orientation of the platforms in the ground reference system $RS_{GROUND}$.

4. The sum of forces (Fz1, Fz2, Fz3, Fz4) of the 4 load cells 201-204 in each platform 21-23 allows the obtaining of the load applied in each platform (FzA, FzB, FzC). This load (or sum of forces) is referred to as Fz.

5. The load application point in each platform 21-23 (on which the weight is applied) is calculated in the corresponding platform reference system ($RS_{PLATFORM-A}$, $RS_{PLATFORM-B}$, $RS_{PLATFORM-C}$) using the sum of forces and moments, that is to say, from signals captured by the load cells of each platform. The result of this stage is a 3D point (x,y,z), but, in practice, it is treated as a 2D point (x,y) considering that z=0 (a point on the surface of the platform):

- This calculation is made in the upper surface 250 of the platform 21-23,

- The inputs are, for each load cell 201-204, the position of the load cells (x1, y1), (x2, y2), (x3, y3), (x4, y4) and the force measured by each load cell (Fz1, Fz2, Fz3, Fz4), wherein 1, 2, 3, 4 refer to respective load cells 201, 202, 203, 204,

- The result is the position ($X_m$, $y_m$) of the application point of a resultant force Fz equivalent to the weight measured by the platform. In the following formulae, "m" is the shared mass of the aircraft supported by the platform, "$g_z$" is the acceleration due to gravity, "$M_x$" and "$M_y$" are force moments with respect to X axis and Y axis of the platform, respectively.

$$\sum F = F_{z1} + F_{z2} + F_{z3} + F_{z4} + F_z = 0 \Rightarrow F_z = -m * g_z$$

$$\sum M_y = F_{z1} \cdot x_1 + F_{z2} \cdot x_2 + F_{z3} \cdot x_3 + F_{z4} \cdot x_4 + F_z \cdot x_m = 0 \Rightarrow x_m$$

$$\sum M_x = F_{z1} \cdot y_1 + F_{z2} \cdot y_2 + F_{z3} \cdot y_3 + F_{z4} \cdot y_4 + F_z \cdot y_m = 0 \Rightarrow y_m$$

Solving the system of equations, in each platform 21-23 the position ($x_m$, $y_m$) of the load application point is obtained:

$$\Sigma Fz=0$$
$$\Sigma Mx=0$$
$$\Sigma My=0$$

$$Fz1+Fz2+Fz3+Fz4+M*gz =0$$
$$Fz1*y1+Fz2*y2+Fz3*y3+Fz4*y4+M*gz *ym=0$$
$$Fz1*x1+Fz2*x2+Fz3*x3+Fz4*x4+M*gz *xm=0$$

$$M*gz = -(Fz1+Fz2+Fz3+Fz4)$$
$$ym = -(Fz1*y1+Fz2*y2+Fz3*y3+Fz4*y4)/(M*gz)$$
$$xm = -(Fz1*x1+Fz2*x2+Fz3*x3+Fz4*x4)/(M*gz)$$

6. The load application point $(x_m, y_m)$ in each platform 21-23 is transformed to the ground reference system $RS_{GROUND}$ using the HMTs obtained in point 3.

7. The load measured by the different platforms allows the obtaining of the mass of the aircraft using the following formulae. Where Fz means the gravity force in each platform A, B and C.

$$\Sigma Fx = f_{xA} + f_{xB} + f_{xC}$$

$$\Sigma Fy = f_{yA} + f_{yB} + f_{yC}$$

$$\Sigma Fz = f_{zA} + f_{zB} + f_{zC} + m_a \cdot g_z \quad \Rightarrow \quad \Sigma Fz = f_{zA} + f_{zB} + f_{zC} + m_a \cdot g_z \quad m_a \quad \Rightarrow$$

8. The 2D position of the CoG for this pose (position 1 of the aircraft) is obtained with a new force and moments calculation with the inputs of the sum of forces for each platform obtained in point 4 and the load application points obtained in point 6. This is done in the ground reference system $RS_{GROUND}$. It is a 2D position because it is in the ground plane (XY), and it is known that the Z coordinate is in a line perpendicular to the ground plane (XY), considering a ground plane normal to the local gravity vector. The formulae used are as indicated below. The moments (X,Y) are calculated in a system where ZA, ZB and ZC have the same value and can be considered null, resulting in that Fx and Fy in the platforms do not need to be measured, thus simplifying the equation system. The result of resolving this equation system is the X and Y position of the CoG (Xcog and Ycog).

$$\Sigma Mx = y_A \cdot f_{zA} - \overset{0}{\cancel{z_A}} \cdot f_{yA} + y_B \cdot f_{zB} - \overset{0}{\cancel{z_B}} \cdot f_{yB} + y_C \cdot f_{zC} - \overset{0}{\cancel{z_C}} \cdot f_{yC} + m_a \cdot g_z \cdot y_{cog}$$

$$\Sigma My = -\left( -\overset{0}{\cancel{z_A}} \cdot f_{xA} + x_A \cdot f_{zA} - \overset{0}{\cancel{z_B}} \cdot f_{xB} + x_B \cdot f_{zB} - \overset{0}{\cancel{z_C}} \cdot f_{xC} + x_C \cdot f_{zC} + m_a \cdot g_z \cdot x_{cog} \right)$$

$$\Sigma Mz = x_A \cdot f_{yA} - y_A \cdot f_{xA} + x_B \cdot f_{yB} - y_B \cdot f_{xB} + x_C \cdot f_{yC} - y_C \cdot f_{xC}$$

9. The 2D position of the CoG and the gravity vector (also called CoG gravity axis, which represents the local direction of the gravity acceleration, and that is substantially perpendicular to the ground assuming a flat ground) provide a 3D line definition in the $RS_{GROUND}$. This line contains the CoG, but the exact position is unknown, and it can be expressed in the $RS_{AIRCRAFT}$ using the HTM obtained in point 2. In other words, a line perpendicular to the floor plane (XY) containing the CoG in the floor plane is obtained.

So far, the 3D line containing the CoG of the aircraft 1 in a first position (pose) has been obtained and expressed in the $RS_{AIRCRAFT}$.

In the second step (aircraft 1 in a second position or pose), the front platform 21 is in a plane elevated compared to the rear platforms 22-23. The above explained process (steps 1 to 9) are performed again, obtaining a second 3D line expressed in the $RS_{AIRCRAFT}$.

In this second position, the X and Y components of the force in the front platform 21 contribute to the X and Y moments, affecting the calculation of the 2D position of the CoG in this second position. So, these components are used in point 7 and point 8 above when the aircraft is in the second position.

Then, from the $\Sigma Mx$ and $\Sigma My$ equations, the position ($x_{cog}$, $y_{cog}$) of the CoG (position of the x and y coordinates of the center of gravity) can be obtained, wherein "Fz" is the resultant force in point 4 above for each platform, A, B, C represent the three platforms 21-23, and therefore ($x_A$, $y_A$) is the load application point for platform A, ($x_B$, $y_B$) is the load application point for platform B, and (xc, yc) is the load application point for platform C as obtained from point 6 above. The formulae used are indicated below. The moments (X,Y) are calculated in a system where ZB and ZC have the same value and can be considered null, resulting in that the Fx and Fy in the platforms B and C do not need to be measured, thus simplifying the equation system. The "$z_A$" is the elevation of the front platform (platform A), "$m_a$" is the total mass of the aircraft obtained from point 7 and "$g_z$" is the acceleration constant due to gravity. The result of the resolution of this equation system is the X and Y position of the CoG (Xcog and Ycog).

$$\Sigma Mx = Y_A \cdot f_{zA} - z_A \cdot f_{yA} + Y_B \cdot f_{zB} - z_B \cdot f_{yB} + Y_C \cdot f_{zC} - z_C \cdot f_{yC} + m_a \cdot g_z \cdot Y_{cog}$$

$$\Sigma My = -\left( -z_A \cdot f_{xA} + X_A \cdot f_{zA} - z_B \cdot f_{xB} + X_B \cdot f_{zB} - z_C \cdot f_{xC} + X_C \cdot f_{zC} + m_a \cdot g_z \cdot X_{cog} \right)$$

$$\Sigma Mz = X_A \cdot f_{yA} - Y_A \cdot f_{xA} + X_B \cdot f_{yB} - Y_B \cdot f_{xB} + X_C \cdot f_{yC} - Y_C \cdot f_{xC}$$

$$\Sigma Mx = Y_A \cdot f_{zA} - z_A \cdot f_{yA} + Y_B \cdot f_{zB} - \overset{0}{\cancel{z_B}} \cdot f_{yB} + Y_C \cdot f_{zC} - \overset{0}{\cancel{z_C}} \cdot f_{yC} + m_a \cdot g_z \cdot Y_{cog}$$

$$\Sigma My = -\left( -z_A \cdot f_{xA} + X_A \cdot f_{zA} - \overset{0}{\cancel{z_B}} \cdot f_{xB} + X_B \cdot f_{zB} - \overset{0}{\cancel{z_C}} \cdot f_{xC} + X_C \cdot f_{zC} + m_a \cdot g_z \cdot X_{cog} \right)$$

$$\Sigma Mz = X_A \cdot f_{yA} - Y_A \cdot f_{xA} + X_B \cdot f_{yB} - Y_B \cdot f_{xB} + X_C \cdot f_{yC} - Y_C \cdot f_{xC}$$

From these equations, after performing the point 9, the 3D line containing the CoG of the aircraft 1 in a second position (pose) has been obtained and expressed in the $RS_{AIRCRAFT}$.

This process (points 1-9) is done once per pose of the aircraft. Point 1 could be done only once, since the result of point1 should be substantially the same (if no measurement errors occur) in both poses, because the cameras and ground reference points 41 remain fixed irrespective of the aircraft pose. Thus, as many 3D lines as steps are obtained. For example, Figure 10a schematically shows the line perpendicular to the floor plane (XY) containing the position of the CoG in the first position. Figure 10b schematically shows the line perpendicular to the floor plane (XY) containing the position of the CoG in the second position. As explained in point 9, the 3D lines are obtained in the ground reference system $RS_{GROUND}$ and are then transformed to the aircraft reference system $RS_{AIRCRAFT}$.

The last calculation to obtain the 3D coordinates of the CoG in the $RS_{AIRCRAFT}$ is the calculation of the intersection of the lines expressed in that $RS_{AIRCRAFT}$, as depicted in figure 11. This is done using a conventional algorithm for obtaining the intersection of two lines in 3D. Alternatively, a conventional algorithm for obtaining closest points between the two lines may be used. In the particular case in which, due to measurement errors, the lines do not intersect, then a closest point of the line obtained in the first step to the line obtained in the second step, is selected, assuming an error in the calculation. This is performed applying conventional geometrical algorithms.

The intersection represents the position of the CoG (3D) of the aircraft in the reference system of the aircraft $RS_{AIRCRAFT}$. It is remarked that, unlike prior art methods, because this calculation is performed in the reference system of the aircraft, it is not necessary to dispose the aircraft in a balance position in order to perform the measurements. Therefore, the position of the CoG of the aircraft in 3D will be fixed as long as the configuration or free load of the aircraft does not change.

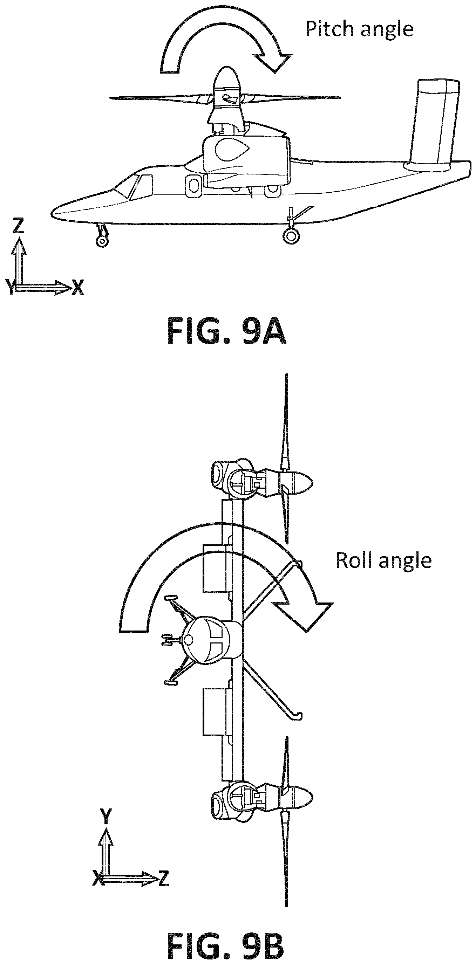

So far, the 3D CoG of the aircraft has been obtained. In embodiments of the invention, balance information of the aircraft can also be obtained. Balance information can be obtained from pitch and roll angles (see Figures 9a-9c) in the different positions. Pitch and roll angles in a balanced aircraft during flight are normally null in order to obtain a suitable behavior of the aircraft during maneuvers and to minimize the consumption according to the design of the aircraft. Those angles, combined with a suitable CoG position, contribute to optimize the behavior of the aircraft in operation. It is remarked that the yaw angle is not relevant as far as the behaviour of the aircraft is concerned. The yaw angle defines the movement direction but does not have a significant impact on the aircraft's behaviour. Figures 9a-9c show respectively pitch, roll and yaw angles with respect to the ground reference system $RS_{GROUND}$.

Pitch and roll angles, which can represent the balance of the aircraft, in both positions can be obtained directly from the information provided by the HMT between the ground reference system $RS_{GROUND}$ and aircraft reference system $RS_{AIRCRAFT}$. The pitch angle is obtained by computing the angle between the X axis of the aircraft reference system $RS_{AIRCRAFT}$ and the Z axis of the ground reference system $RS_{GROUND}$; and the roll angle is obtained by computing the angle between the Y axis of the aircraft reference system $RS_{AIRCRAFT}$ and the Z axis of the ground reference system $RS_{GROUND}$.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art -for example, as regards the choice of materials, dimensions, components, configuration, etc.-, within the general scope of the invention as defined in the claims.

## Claims

1. A computer-implemented method for obtaining the position of the Centre of Gravity (CoG) of an aircraft (1) having at least three support points (11-13), wherein a measurement platform (21-23) comprising a plurality of load cells (201-204) is disposed under each support point (11-13), the method comprising:

    performing the following actions with the aircraft (1) disposed in a first position:

        obtaining the position of a plurality of ground target points (41) disposed at the surroundings of the aircraft (1) and establishing a ground reference system ($RS_{GROUND}$) with the ground target points (41);
        obtaining the position of a plurality of aircraft target points (43) disposed at specific locations at the aircraft (1), establishing an aircraft reference system ($RS_{AIRCRAFT}$) and locating the aircraft (1) in the ground reference system ($RS_{GROUND}$);
        obtaining the position of a plurality of platforms target points (42) disposed at specific locations at the measurement platforms (21-23), establishing one platform reference system ($RS_{PLATFORM-A}$, $RS_{PLATFORM-B}$, $RS_{PLATFORM-C}$) per measuring platform (21-23) from the position of the platforms target points (42) and locating the measurement platforms (21-23) in the ground reference system ($RS_{GROUND}$);
        at each measuring platform (21-23), measuring a force applied to each load cell (201-204); from the force applied to each load cell (201-204) and from the position of each load cell (201-204) in the corresponding measuring platform (21-23), calculating a position of the load application point in each measurement platform (21-23); and locating the load application point in the ground reference system ($RS_{GROUND}$);
        from the force applied to each measuring platform (21-23) and from the position of the load application point in each measurement platforms (21-23), obtaining the position of the CoG of the aircraft (1) in the ground reference system ($RS_{GROUND}$); calculating a 3D line containing the position of the CoG of the aircraft (1) and the gravity axis; and transforming this 3D line to the aircraft reference system ($RS_{AIRCRAFT}$);

repeating the former actions with the aircraft (1) disposed in a second position, in which the position in height of at least one of the support points (11-13) of the aircraft (1) is modified with respect to the position in height of the at least one of the support points (11-13) when the aircraft (1) is in the first position, thus obtaining a second 3D line containing the position of the CoG of the aircraft (1);

from the first and second 3D lines containing the center-of-gravity of the aircraft (1), obtaining the 3D coordinates of the center-of-gravity of the aircraft (1).

2. The method of claim 1, wherein the position of the load application point in each measurement platform (21-23) is calculated in the respective platform reference system ($RS_{PLATFORM-A}$, $RS_{PLATFORM-B}$, $RS_{PLATFORM-C}$).

3. The method of either claim 1 or 2, wherein the platform reference systems ($RS_{PLATFORM-A}$, $RS_{PLATFORM-B}$, $RS_{PLATFORM-C}$) are transformed to the ground reference system ($RS_{GROUND}$) through a Homogeneous Transformation Matrix; and the aircraft reference system ($RS_{AIRCRAFT}$) is transformed to the ground reference system ($RS_{GROUND}$) through a Homogeneous Transformation Matrix.

4. The method of any one of claims 1-3, wherein the 3D coordinates of the center-of-gravity of the aircraft (1) are obtained either by calculating the intersection of the first and second 3D lines or by applying an algorithm for obtaining closest points between the two 3D lines.

5. The method of any one of claims 1-4, wherein the position of the plurality of ground target points (41), aircraft target points (43) and platforms target points (42) is obtained with a measuring system based on photogrammetry, the measuring system comprising at least one camera (31-32), wherein the position of the plurality of target points (41, 42, 43) is obtained from images captured by said at least one camera (31-32).

6. The method of any one of claims 1-4, wherein the position of the plurality of ground target points (41), aircraft target points (43) and platforms target points (42) is obtained with a measuring system based on laser-tracking, the measuring system comprising a laser tracker and a plurality of reflectors disposed at the position of the target points (41-43).

7. The method of any one of claims 1-6, wherein the aircraft (1) is a tiltrotor and the at least three support points (11-13) are one front landing gear (11) and two rear landing gears (12, 13).

8. The method of any one of claims 1-6, wherein the aircraft (1) is a helicopter having two support bars, wherein the at least three support points (11-13) are disposed as follows: two support points are located in one of the two support bars and a third support point is located in the other support bar.

9. The method of any one of claims 1-8, wherein the Z axis of the ground reference system ($RS_{GROUND}$) is aligned with the gravity direction or a relationship between the Z axis of the ground reference system ($RS_{GROUND}$) and the gravity direction is known.

10. A system for obtaining the Centre of Gravity (CoG) of an aircraft (1) having at least three support points (11-13), the system comprising:

a measurement platform (21-23) disposed under each support point (11-13), wherein each measurement platform (21-23) comprises a plurality of load cells (201-204), wherein each measuring platform (21-23) is configured to measure a force applied to each load cell (201-204);
elevating means (25) disposed under at least one of the measurement platforms (21) and corresponding support point (11), configured to modify the position in height of said at least one support point (11) and measurement platform (21) in order to perform measurements in a modified position in height of the aircraft (1);
a plurality of ground target points (41) disposed at the surroundings of the aircraft (1), a plurality of aircraft target points (43) disposed at specific locations at the aircraft (1) and a plurality of platforms target points (42) disposed at specific locations at the measurement platforms (21-23);
means for obtaining the position of the ground target points (41), aircraft target points (43) and platforms target points (42);
processing means for:

establishing a ground reference system ($RS_{GROUND}$) with the ground target points (41);
establishing an aircraft reference system ($RS_{AIRCRAFT}$) with the aircraft target points (43) and locating the aircraft (1) in the ground reference system ($RS_{GROUND}$);

and establishing one platform reference system ($RS_{PLATFORM-A}$, $RS_{PLATFORM-B}$, RSPLATFORM-C...) per measuring platform (21-23) with the platforms target points (42) and locating the platforms (21-23) in the ground reference system ($RS_{GROUND}$);

from the force applied to each load cell (201-204) and from the position of each load cell (201-204) in the corresponding measuring platform (21-23), calculating a position of the load application point in each measurement platforms (21-23); and locating the load application point in the ground reference system ($RS_{GROUND}$);

from the force applied to each measuring platform (21-23) and from the position of the load application point in each measurement platforms (21-23), obtaining the position of the CoG of the aircraft (1) in the XY plane of ground reference system ($RS_{GROUND}$); calculating a 3D line containing the position of the CoG of the aircraft (1) by using the obtained position in the XY plane and the gravity axis; and transforming this 3D line to the aircraft reference system ($RS_{AIRCRAFT}$);

obtaining the 3D coordinates of the center-of-gravity of the aircraft (1) from at least two 3D lines containing the position of the CoG of the aircraft (1) obtained with the aircraft (1) in at least two different poses.

11. The system of claim 10, wherein the means for obtaining the position of the ground target points (41), aircraft target points (43) and platforms target points (42) comprises a measuring system based on photogrammetry, the measuring system comprising at least one camera (31-32), wherein the position of the plurality of target points (41, 42, 43) is obtained from images captured by said at least one camera (31-32).

12. The system of claim 10, wherein the means for obtaining the position of the ground target points (41), aircraft target points (43) and platforms target points (42) comprises a measuring system based on laser-tracking, the measuring system comprising a laser tracker and a plurality of reflectors disposed at the position of the target points (41-43).

13. The system of any one of claims 10-12, wherein the elevating means (25) is configured to ensure a vertical elevation of the support point without significant change in the inclination of the upper surface (250) of the platform (21).

14. The system of any one of claims 10-13, wherein the load cells (201-204) of the measurement platforms (22-23) disposed under the one or more support points which can be elevated are configured to measure three components (X, Y, Z) of the applied force.

15. A computer program product comprising computer program instructions/code for performing the method according to any one of claims 1-9, or a computer-readable memory/medium that stores program instructions/code for performing the method according to any one of claims 1-9.

**FIG. 1**

**FIG. 2**

**FIG. 3**

**FIG. 4A**

**FIG. 4B**

**FIG. 5**

FIG. 6

FIG. 7

FIG. 8A

FIG. 8B

Pitch angle

FIG. 9A

Roll angle

FIG. 9B

Yaw angle

X

Y

Z ⊙ → X

# FIG. 9C

Position 1

Position 2

# FIG. 10A

# FIG. 10B

FIG. 11

Europäisches
Patentamt

European
Patent Office

Office européen
des brevets

# EUROPEAN SEARCH REPORT

Application Number

EP 22 38 2252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2012 101705 A1 (DEUTSCH ZENTR LUFT & RAUMFAHRT [DE]) 26 September 2013 (2013-09-26) * paragraphs [[0012]], [[0038]] – [[0048]]; claims 1-9; figures 1-4 * | 1-15 | INV. B64F5/60 G01M1/12 |
| A | KR 2004 0107287 A (KOREA AEROSPACE IND LTD) 20 December 2004 (2004-12-20) * abstract; figures 1-4 * | 1-15 | |
| A,D | KR 2003 0034668 A (KOREA AEROSPACE IND LTD [KR]) 9 May 2003 (2003-05-09) * abstract; figures 1-5 * | 1-15 | |
| A | US 2017/322101 A1 (CHANG WEN-LIANG [TW]) 9 November 2017 (2017-11-09) * abstract; figures 1-5 * | 1-15 | |
| A | CN 105 444 855 A (SHENYANG AIRCRAFT CORP) 30 March 2016 (2016-03-30) * paragraphs [[0003]] – [[0013]]; figures 1-4 * | 1-15 | TECHNICAL FIELDS SEARCHED (IPC) G01M G01G B64F |

The present search report has been drawn up for all claims

| Place of search | Date of completion of the search | Examiner |
|---|---|---|
| Munich | 27 July 2022 | Carlier, François |

## ANNEX TO THE EUROPEAN SEARCH REPORT
## ON EUROPEAN PATENT APPLICATION NO.

EP 22 38 2252

This annex lists the patent family members relating to the patent documents cited in  the above-mentioned European search report.
The members are as contained in the European Patent Office EDP file on
The European Patent Office is in no way liable for these particulars which are merely given for the purpose of information.

27-07-2022

| Patent document cited in search report | Publication date | Patent family member(s) | Publication date |
|---|---|---|---|
| DE 102012101705 A1 | 26-09-2013 | NONE | |
| KR 20040107287 A | 20-12-2004 | NONE | |
| KR 20030034668 A | 09-05-2003 | NONE | |
| US 2017322101 A1 | 09-11-2017 | NONE | |
| CN 105444855 A | 30-03-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8060296 B2
- CA 2665963 A1
- CN 108106780 A
- KR 100937888 B1
- KR 20030034668 A
- JP H04328438 A
- US 20020099497 A1

**Non-patent literature cited in the description**

- Close Range Photogrammetry: Principles, Techniques and Applications. John Wiley and Sons Ltd,